# FASCICULE DE BREVET EUROPEEN

(11) **EP 2 037 143 B1**
(45) Date de publication et mention de la délivrance du brevet: **05.05.2010**
(21) Numéro de dépôt: 08161577.5
(22) Date de dépôt: 31.07.2008
(51) Int. Cl.: F16D 23/12, F16D 27/00

(54) **Dispositif de commande perfectionné**
Perfektionierte Steuervorrichtung
Improved control device

(30) Priorité: 11.09.2007 FR 0757497
(43) Date de publication de la demande: 18.03.2009
(73) Titulaire: Valeo Embrayages, 80009 Amiens (FR)
(72) Inventeur: Maurel, Hervé, 80000 Amiens (FR); Delevallée, Jean-Louis, 80090 Amiens (FR)

(56) Documents cités:
- WO-A-2005/028900
- DE-A1- 19 723 394
- FR-A- 2 790 806
- FR-A- 2 896 288

## Description

La présente invention concerne un dispositif de commande destiné par exemple à être relié à un embrayage de véhicule automobile.

On connaît déjà dans l'état de la technique, notamment d'après FR-A-2 896 288, un dispositif de commande destiné à être relié à un embrayage de véhicule automobile, .

DE 197 23 394 et FR-A-2 790 806 décrivent des dispositifs de commande comportant des moyens d'entraînement d'un organe mené, comprenant un pignon menant relié cinématiquement à un arbre de sortie d'un moteur électrique, engrenant avec une crémaillère reliée cinématiquement à l'organe mené.

On notera qu'une crémaillère est habituellement munie d'une surface de denture définie par une courbe directrice de denture plane et une génératrice de denture perpendiculaire au plan de la courbe de denture passant par cette courbe de denture. La surface de denture est engendrée par le déplacement de la génératrice de denture le long de la directrice de denture.

L'organe mené est un organe allongé déplaçable longitudinalement en translation et destiné à être relié cinématiquement à un embrayage de véhicule automobile. Par exemple, l'organe mené est destiné à pousser un piston d'un vérin hydraulique commandant le déplacement d'une butée de l'embrayage.

Le dispositif de commande comporte en outre des moyens d'assistance à l'entraînement de l'organe mené, comprenant un organe d'assistance sollicité élastiquement contre une came.

On notera qu'une came est habituellement munie d'une surface de came définie par une courbe directrice plane de came et une droite génératrice de came, perpendiculaire au plan de la directrice de came, passant par cette directrice de came. La surface de came est engendrée par le déplacement de la génératrice de came le long de la directrice de came.

Le dispositif de commande comporte également un organe de couplage des moyens d'entraînement et d'assistance, lié cinématiquement à l'organe mené, portant la crémaillère et la came.

On observe que la génératrice de denture est habituellement sensiblement perpendiculaire à la génératrice de came ce qui rend complexe la réalisation de l'organe de couplage. L'organe de couplage peut être réalisé à partir d'un élément de couplage en aluminium sur lequel sont rapportés la crémaillère et la came. Dans ce cas, on notera qu'il est difficile de réaliser un positionnement précis de la crémaillère relativement à la came.

L'organe de couplage peut également être réalisé en une seule pièce. Dans ce dernier cas, la crémaillère et la came sont formées par usinage sur l'organe de couplage, ces opérations d'usinage étant habituellement relativement complexes.

Par ailleurs, on observe que les génératrice de denture et de came perpendiculaires imposent des efforts d'entraînement et d'assistance répartis selon trois dimensions, ce qui implique de guider l'organe de couplage dans ces trois dimensions.

L'invention a notamment pour but de remédier à ces inconvénients en fournissant un dispositif de commande plus simple à réaliser.

A cet effet, l'invention a pour objet un dispositif de commande, du type décrit dans la revendication 1.

Un organe de couplage dont les génératrices de denture et de came sont parallèles est plus simple à fabriquer qu'un organe de couplage connu dans l'état de la technique. Par exemple, cet organe de couplage peut être obtenu en série à l'aide d'opérations de frittage, découpage, extrusion ou clinchage.

En outre, les efforts appliqués par les moyens d'entraînement et d'assistance sur cet organe de couplage sont coplanaires, ce qui simplifie le guidage de cet organe de couplage.

L'invention sera mieux comprise à la lecture de la description qui va suivre, donnée uniquement à titre d'exemple et faite en se référant aux dessins annexés dans lesquels :

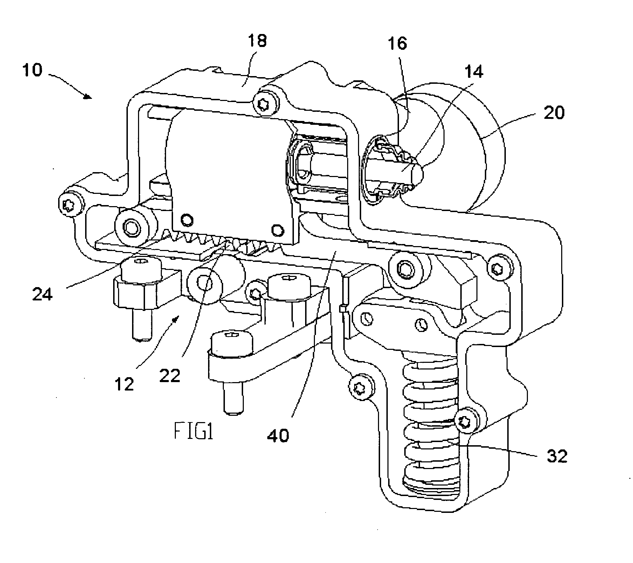

- la figure 1 est une vue en perspective d'un dispositif de commande selon un exemple de mode de réalisation de l'invention,
- les figures 2 à 4 sont des vues en coupe du dispositif de la figure 1 dans différentes configurations d'utilisation,
- la figure 5 est une vue en perspective d'un dispositif de rattrapage d'usure du dispositif de la figure 1. On a représenté sur la figure 1 un dispositif de commande selon un exemple de mode de réalisation de l'invention, désigné par la référence générale 10. Dans l'exemple décrit, le dispositif 10 est destiné à être relié à un embrayage de véhicule automobile afin de commander cet embrayage.

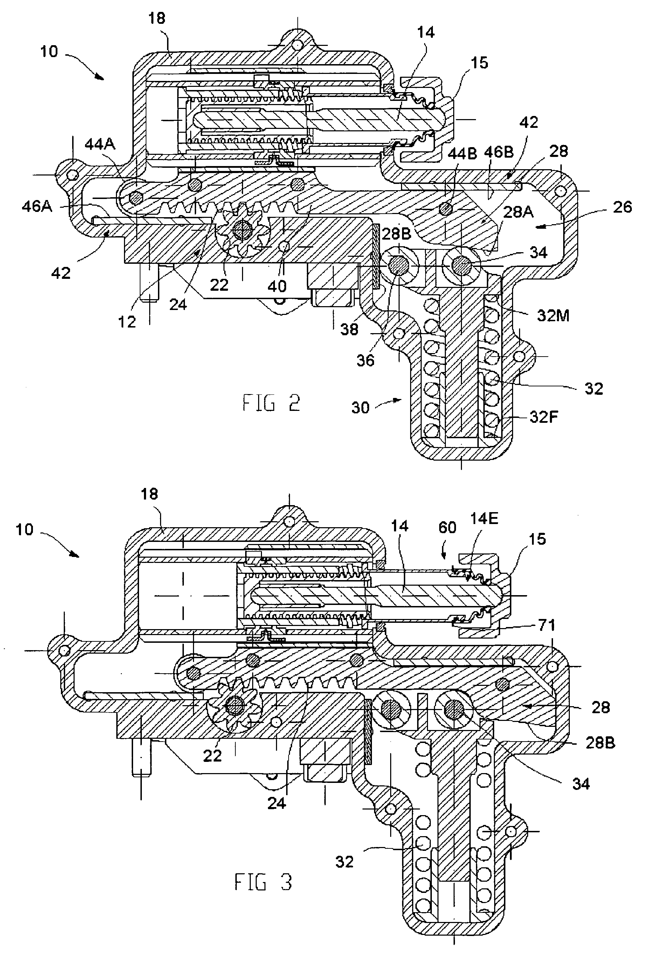

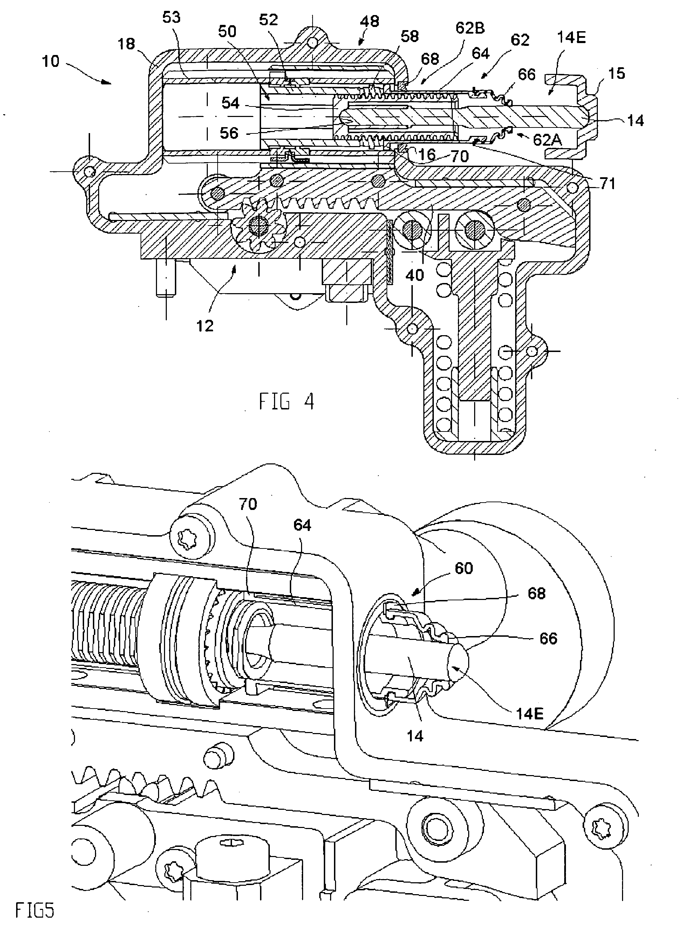

Le dispositif de commande 10 comprend des moyens 12 d'entraînement en translation d'un organe mené 14 de forme générale allongée selon une direction dite longitudinale. Ainsi, cet organe mené 14 est susceptible de se déplacer au moins en translation entre une position escamotée (représentée sur la figure 2) et une position saillante (représentée sur les figures 3 et 4), à travers un orifice 16 ménagé dans un carter fixe 18 du dispositif 10.

On notera qu'on distingue la position escamotée de l'organe mené 14 de sa position saillante par le fait que la partie de l'organe mené 14 qui s'étend dans le carter est plus importante en position escamotée qu'en position saillante.

Dans l'exemple représenté, l'organe mené 14 est une tige déplaçable en translation, destinée à être reliée cinématiquement à un embrayage de véhicule automobile. Par exemple, l'organe mené 14 est destiné à venir en butée avec un élément classique de tringlerie de commande, de préférence une fourchette 15 de commande d'embrayage de véhicule automobile.

En variante, l'organe mené 14 pourrait former un organe d'entrée de commande hydraulique. Dans ce cas, l'organe mené serait une tige de piston de vérin hydraulique, ou un élément solidaire d'une telle tige.

Les moyens d'entraînement 12 comportent un moteur électrique 20, fixé au carter 18, dont l'arbre de sortie forme un organe menant couplé à un pignon menant 22, directement ou par l'intermédiaire de moyens à engrenage, par exemple des moyens de réduction de type épicycloïdal.

Le pignon 22 est destiné à coopérer avec une crémaillère 24 reliée cinématiquement à l'organe mené 14 à l'aide de moyens qui seront décrits plus en détail ultérieurement.

La crémaillère 24 est munie d'une surface de denture définie par une courbe directrice plane de denture et une droite génératrice de denture, perpendiculaire au plan de la directrice de denture, passant par cette directrice de denture.

Le dispositif de commande 10 comprend également des moyens 26 d'assistance à l'entraînement de l'organe mené 14.

Ces moyens d'assistance 26 comprennent une came 28 et des moyens 30 de sollicitation élastique de cette came.

La came 28 est munie d'une surface de came définie par une courbe directrice plane de came et une droite génératrice de came, perpendiculaire au plan de la directrice de came, passant par cette directrice de came.

Les moyens 30 de sollicitation élastique comportent un organe élastique d'assistance 32 à effet axial, sollicité élastiquement contre la came 28. De préférence, l'organe d'assistance 32 comprend au moins un ressort de poussée, par exemple deux ressorts de poussée coaxiaux et logés l'un dans l'autre.

L'organe élastique 32 s'étend entre un siège fixe 32F, dont la position est indépendante de l'allongement de l'organe élastique 32, et un siège mobile 32M, dont la position dépend de l'allongement de l'organe élastique 32.

Le siège fixe 32F est solidaire du carter 18 dans lequel sont logés les moyens d'assistance 26.

Le siège mobile 32M porte un organe de contact 34 destiné à coopérer avec la came 28. De préférence, l'organe de contact 34 comprend au moins un galet destiné à rouler sur la came 28. En outre, le siège mobile 32M porte un second galet 36, destiné à coopérer avec une paroi plane 38 du carter 18 pour guider le siège mobile 32M parallèlement à l'effet axial de l'organe d'assistance 32.

Conformément à l'exemple représenté, les moyens d'entraînement 12 et d'assistance 26 sont couplés à l'aide d'un organe de couplage 40 lié cinématiquement à l'organe mené 14. En effet, l'organe de couplage 40 porte la crémaillère 24 et la came 28. De préférence, l'organe de couplage 40 est formé par une seule pièce allongée, aux extrémités de laquelle sont ménagées respectivement la crémaillère 24 et la came 28.

On notera que la crémaillère 24 et la came 28 sont agencées sur l'organe de couplage 40 de façon que la génératrice de denture de la crémaillère 24 soit parallèle à la génératrice de la came 28.

De préférence, le dispositif 10 comporte des moyens 42 de guidage en translation de l'organe de couplage 40. Ces moyens de guidage 42 comportent par exemple des galets 44A, 44B, respectivement agencés à deux extrémités de l'organe de couplage 40, coopérant respectivement avec des parois de guidage 46A, 46B ménagées sur le carter 18.

On notera que, du fait que les génératrices de denture et de came sont parallèles, il est uniquement nécessaire de guider l'organe de couplage 40 en translation longitudinale.

On précisera ci-dessous les principaux aspects du fonctionnement du des moyens d'entraînement 12 et d'assistance 26 du dispositif de commande 10, en référence aux figures 2 et 3.

On considère initialement le dispositif de commande 10 dans une position dans laquelle l'embrayage est par exemple dans une configuration débrayée (figure 2), l'organe mené 14 étant en position escamotée.

Le galet 34 des moyens d'assistance 26 coopère avec une première partie 28A de la surface de la came 28. Cette partie de surface 28A est de préférence sensiblement perpendiculaire à l'axe de l'organe d'assistance 32, ou faiblement inclinée par rapport à un plan perpendiculaire à cet axe.

Pour placer l'embrayage dans une configuration embrayée (figure 3), le moteur électrique 20 est activé de façon à entraîner le pignon 22 dans un sens d'embrayage. Ce pignon 22, engrenant avec la denture de la crémaillère 24, déplace l'organe de couplage 40 de façon à entraîner l'organe mené 14 vers sa position saillante.

Du fait de ce déplacement de l'organe de couplage 40, la position relative du galet 34 par rapport à la came 28 est modifiée de façon que ce galet 34 coopère avec une seconde partie 28B de la surface de la came, de préférence plus inclinées que la première partie de surface 28A.

Par effet de rampe entre la came 28 et le galet 34 en contact avec celle-ci, l'organe de couplage 40 est sollicité élastiquement dans le même sens que celui imposé par la rotation du pignon 22 dans le sens d'embrayage.

Les moyens d'assistance 26 permettent donc d'assister le déplacement de l'organe mené 14 lors du passage d'une configuration débrayée à une configuration embrayée de l'embrayage.

Pour revenir en position débrayée, il suffit d'entraîner le pignon 22 en rotation dans un sens de débrayage contraire au sens d'embrayage.

On notera que, l'usure de l'embrayage, notamment l'usure d'une friction de l'embrayage, a tendance à augmenter la course de la fourchette 15 de l'embrayage entre ses positions de commande d'embrayage et de débrayage.

Afin de compenser l'effet de l'usure de l'embrayage, le dispositif de commande 10 comprend des moyens 48 de rattrapage d'usure, destinés à déplacer la position saillante de fin de course de l'organe mené, comme cela est visible sur la figure 4.

Les moyens de rattrapage d'usure peuvent être d'un type classique. On décrira ci-dessous les principaux éléments d'un exemple de réalisation de moyens 48 de rattrapage d'usure sans rentrer dans les détails de leur structure et de leur fonctionnement connus de l'homme du métier spécialiste des dispositifs de rattrapage d'usure. On pourra également se reporter au document FR-06 51935 qui décrit en détail des moyens de rattrapage d'usure.

Dans l'exemple illustré, les moyens 48 de rattrapage d'usure comportent un organe télescopique 50 de rattrapage d'usure.

Cet organe télescopique 50 comporte une première partie 52 liée cinématiquement aux moyens d'entraînement 12. Par exemple, cette première partie 52 est fixée sur l'organe de couplage 40 par des vis si bien qu'elle est liée en translation avec cet organe de couplage 40. Le dispositif de commande 10 comporte des rails 53 de guidage de l'organe télescopique 50 en translation.

L'organe télescopique 50 comporte également une seconde partie 54 destinée à coopérer avec l'organe mené 14 pour l'entraîner de sa position escamotée vers sa position saillante. A cet effet, la seconde partie 54 comporte une butée 56 susceptible de coopérer avec l'organe mené 14 éventuellement de façon légèrement rotulante.

Les première 52 et seconde 54 parties sont aptes à se déplacer en translation l'une par rapport à l'autre, par coopération de filetages complémentaires portés par ces première 52 et seconde parties 54.

En effet, la première partie 52 comporte un écrou 58, libre en rotation, muni d'un filetage intérieur coopérant avec un filetage complémentaire ménagé sur la seconde partie 54. Ainsi, lorsque l'écrou 58 tourne, la seconde partie 54 se déplace en translation par rapport à la première partie 52, déplaçant ainsi la position saillante de fin de course de l'organe mené 14.

Afin de protéger les éléments intérieurs au carter 18 de l'eau ou de la poussière, le dispositif de commande 10 comporte des moyens 60 d'étanchéité entre le carter 18 et une partie 14E de l'organe mené s'étendant à l'extérieur du carter, dite partie externe 14E. Ces moyens d'étanchéité 60 sont visibles plus en détail sur la figure 5.

Les moyens d'étanchéité 60 comprennent un premier organe d'étanchéité 62 entourant l'organe mené 14.

Ce premier organe d'étanchéité 62 comporte un élément tubulaire rigide 64 relié à un élément 66, de forme générale de révolution, assurant une jonction étanche avec l'organe mené 14.

L'élément de jonction 66 forme une première extrémité 62A du premier organe d'étanchéité 62. Cette première extrémité 62A est liée en translation à la partie externe 14E de l'organe mené 14 lorsque cet organe mené 14 se déplace entre ses positions escamotée et saillante.

En effet, cet élément de jonction 66 est monté suffisamment serré autour de l'organe mené 14 pour que le premier organe d'étanchéité 62 soit entraîné en translation par l'organe mené 14 lorsque celui-ci se déplace entre ses positions escamotée et saillante.

On notera toutefois que cet élément de jonction 66 est lié en translation de manière libérable à la partie externe 14E de l'organe mené 14, afin de permettre le déplacement de l'organe mené 14 par rapport au premier organe d'étanchéité 62 lorsque les moyens de rattrapage d'usure 48 déplacent la position saillante de fin de course de l'organe mené 14. En effet le serrage de l'élément de jonction 66 est calibré pour permettre ce déplacement de l'organe mené 14 par rapport au premier organe d'étanchéité 62.

Par ailleurs, on notera que l'élément de jonction 66 est suffisamment souple pour pouvoir, le cas échéant, se déformer radialement et/ou axialement. Notamment, cet élément de jonction 66 est suffisamment souple radialement pour ne pas exercer un effort de résistance trop important en cas de débattement radial de l'organe mené 14 (du fait de la coopération rotulante de l'organe 14 avec l'organe télescopique 50). En effet, un effort de résistance trop important risquerait d'endommager cet élément de jonction 66.

L'élément tubulaire rigide 64 forme une seconde extrémité 62B du premier organe d'étanchéité 62, montée coulissante à travers l'orifice 16 du carter 18. Le premier organe d'étanchéité 62 est donc susceptible de coulisser à l'intérieur du carter 18, ce qui réduit son encombrement axial à l'extérieur du carter en position escamotée de l'organe mené 14.

L'élément tubulaire rigide 64 coulisse également à travers un second organe annulaire d'étanchéité 68 agencé entre le contour de cet orifice 16 et la seconde extrémité 62B du premier organe d'étanchéité 62. Ce second organe d'étanchéité permet d'assurer l'étanchéité entre l'élément tubulaire 64 et le carter 18.

On notera que l'élément tubulaire 64 comporte un épaulement 70 formant butée, destiné à coopérer avec une butée d'arrêt complémentaire ménagée sur le carter 18 lorsque l'organe mené 14 est en position saillante.

Cet épaulement 70 comporte également des rainures destinées à coopérer avec les rails de guidage 53 de façon à guider l'élément tubulaire 64 en translation.

Le premier organe d'étanchéité 62 comporte en outre une rondelle de butée 71 agencée autour de l'élément tubulaire 64, destinée à coopérer avec une butée d'arrêt complémentaire ménagée sur le carter 18 lorsque l'organe mené 14 est en position escamotée.

On notera également que la seconde partie 54 de l'organe télescopique de rattrapage d'usure 50 est dimensionnée de façon à pouvoir coulisser dans le premier organe d'étanchéité 62, notamment dans l'élément tubulaire rigide 64, lorsque cette seconde partie 54 se déplace en translation par rapport à la première partie 52.

Ainsi, la seconde partie 54 et l'élément tubulaire rigide 64 ne se gênent pas mutuellement lors de leurs déplacements respectifs, et la seconde partie 54 ne risque pas d'endommager le premier organe d'étanchéité 62.

On notera enfin que l'invention n'est pas limitée au mode de réalisation précédemment décrit.

En effet, en variante, l'invention pourrait être appliquée à un dispositif de commande ne comportant pas de moyens de rattrapage d'usure.

## Revendications

1. Dispositif de commande (10), **caractérisé en ce qu'**il comporte :
- des moyens (12) d'entraînement d'un organe mené (14), comprenant un pignon menant (22) engrenant avec une crémaillère (24),
- des moyens (26) d'assistance à l'entraînement de l'organe mené (14), comprenant un organe d'assistance (32) sollicité élastiquement contre une came (28),
- un organe (40) de couplage des moyens d'entraînement (12) et d'assistance (26), lié cinématiquement à l'organe mené (14), portant la crémaillère (24) et la came (28),
dans lequel :
- la crémaillère (24) est munie d'une surface de denture définie par une courbe directrice plane de denture et une droite génératrice de denture, perpendiculaire au plan de la directrice de denture, passant par cette directrice de denture, et
- la came (28) est munie d'une surface de came définie par une courbe directrice plane de came et une droite génératrice de came, perpendiculaire au plan de la directrice de came, passant par cette directrice de came,
et dans lequel les génératrices de denture et de came sont parallèles, et **caracterisé en ce que** l'organe de couplage (40) est formé par une seule pièce sur laquelle sont ménagées la crémaillère (24) et la came (28).

2. Dispositif de commande (10) selon la revendication 1, comportant des moyens (42) de guidage en translation de l'organe de couplage (40).

3. Dispositif de commande (10) selon l'une quelconque des revendications précédentes, dans lequel l'organe d'assistance (32) comprend au moins un ressort de poussée agencé entre des sièges fixe (32F) et mobile (32M), le siège mobile (32M) portant un organe de contact (34) destiné à coopérer avec la came (28).

4. Dispositif de commande (10) selon la revendication 3, dans lequel l'organe d'assistance (32) comprend deux ressorts de poussée coaxiaux logés l'un dans l'autre.

5. Dispositif de commande (10) selon la revendication 3 ou 4, dans lequel l'organe de contact (34) comprend au moins un galet destiné à rouler sur la came (28).

6. Dispositif de commande (10) selon l'une quelconque des revendications précédentes, dans lequel le pignon menant (22) est relié cinématiquement à un arbre de moteur électrique (20).

7. Dispositif de commande (10) selon l'une quelconque des revendications précédentes, dans lequel l'organe mené (14) est une tige déplaçable en translation.

8. Dispositif de commande (10) selon l'une quelconque des revendications précédentes, dans lequel l'organe mené (14) est destiné à être relié cinématiquement à un embrayage de véhicule automobile.

## Claims

1. Control device (10), **characterised in that** it comprises:
- means (12) for driving a driven unit (14), comprising a driving pinion (22) which engages with a rack (24);
- means (26) for assistance with driving the driven unit (14), comprising an assistance unit (32) which is thrust resiliently against a cam (28);
- a unit (40) for coupling the drive means (12) and the assistance means (26), which is connected kinematically to the driven unit (14), which supports the rack (24) and the cam (28);
wherein:
- the rack (24) is provided with a toothing surface which is defined by a toothing flat directrix curve and a toothing generatrix straight line, perpendicular to the toothing directrix plane, which passes via this toothing directrix; and
- the cam (28) is provided with a cam surface which is defined by a cam flat directrix curve and a cam generatrix straight line, perpendicular to the plane of
the cam directrix, which passes via this cam directrix,
and wherein the toothing and cam generatrices are parallel, and **characterised in that** the coupling unit (40) is formed by a single part on which the rack (24) and the cam (28) are provided.

2. Control device (10) according to claim 1, comprising means (42) for guiding the coupling unit (40) in translation.

3. Control device (10) according to either of the preceding claims, wherein the assistance unit (32) comprises at least one thrust spring which is arranged between fixed (32F) and movable (32M) seats, the movable seat (32M) supporting a contact unit (34) which is designed to co-operate with the cam (28).

4. Control device (10) according to claim 3, wherein the assistance unit (32) comprises two coaxial thrust springs which are accommodated in one another.

5. Control device (10) according to claim 3 or claim 4, wherein the contact unit (34) comprises at least one roller which is designed to roll on the cam (28).

6. Control device (10) according to any one of the preceding claims, wherein the driving pinion (22) is connected kinematically to a shaft of an electric motor (20).

7. Control device (10) according to any one of the preceding claims, wherein the driven unit (14) is a rod which can be displaced in translation.

8. Control device (10) according to any one of the preceding claims, wherein the driven unit (14) is designed to be connected kinematically to a motor vehicle clutch.

## Patentansprüche

1. Betätigungsvorrichtung (10), **dadurch gekennzeichnet, dass** sie umfasst:
- Mittel (12) zum Antrieb eines Abtriebsorgans (14), umfassend ein Antriebsritzel (22), das mit einer Zahnstange (24) in Eingriff ist,
- Mittel (26) zur Unterstützung des Antriebs des Abtrieborgans (14), umfassend ein Unterstützungsorgan (32), welches elastisch gegen einen Nocken (28) beaufschlagt ist,
- ein Organ (40) zur Kopplung der Antriebsmittel (12) mit den Unterstützungsmitteln (26), welches kinematisch mit dem Abtrieborgan (14) verbunden ist, und welches die Zahnstange (24) und den Nocken (28) trägt,
wobei:
- die Zahnstange (24) mit einer Verzahnungs-Oberfläche versehen ist, welche durch eine ebene Verzahnungs-Leitkurve und eine gerade Verzahnungs-Erzeugende, welche senkrecht zur Ebene der Verzahnungs-Leitkurve entlang dieser Verzahnungs-Leitkurve verläuft, definiert ist, und
- der Nocken (28) mit einer Nocken-Oberfläche versehen ist, welche durch eine ebene Nocken-Leitkurve und eine gerade Nocken-Erzeugende, welche senkrecht zur Ebene der Nocken-Leitkurve entlang dieser Nocken-Leitkurve verläuft, definiert ist,
und wobei die Erzeugenden der Verzahnung und des Nockens parallel sind,
und **dadurch gekennzeichnet, dass** das Kopplungsorgan (40) durch ein einziges Stück gebildet ist, in welches die Zahnstange (24) und der Nocken (28) eingebracht sind.

2. Betätigungsvorrichtung (10) nach Anspruch 1, umfassend Mittel (42) zur translatorischen Führung des Kopplungsorgans (40).

3. Betätigungsvorrichtung (10) nach einem der vorherigen Ansprüche, wobei das Unterstützungsorgan (32) mindestens eine Druckfeder umfasst, die zwischen einem festen Sitz (32F) und einem beweglichen Sitz (32M) angeordnet ist, wobei der bewegliche Sitz (32M) ein Kontaktorgan (34) trägt, welches dazu bestimmt ist, mit dem Nocken (28) zusammenzuwirken.

4. Betätigungsvorrichtung (10) nach Anspruch 3, wobei das Unterstützungsorgan (32) zwei koaxiale Druckfedern umfasst, die ineinander angeordnet sind.

5. Betätigungsvorrichtung (10) nach Anspruch 3 oder 4, wobei das Kontaktorgan (34) mindestens eine Rolle umfasst, die dazu bestimmt ist, auf dem Nocken (28) abzurollen.

6. Betätigungsvorrichtung (10) nach einem der vorherigen Ansprüche, wobei das Antriebsritzel (22) kinematisch mit der Welle eines Elektromotors (20) verbunden ist.

7. Betätigungsvorrichtung (10) nach einem der vorherigen Ansprüche, wobei das Abtriebsorgan (14) ein translatorisch verschiebbarer Stößel ist.

8. Betätigungsvorrichtung (10) nach einem der vorherigen Ansprüche, wobei das Abtriebsorgan (14) dazu bestimmt ist, kinematisch mit einer Kupplung eines Kraftfahrzeugs verbunden zu werden.
